(19) Europäisches Patentamt
European Patent Office
Office européen des brevets

(11) **EP 2 064 976 A1**

(12) **EUROPEAN PATENT APPLICATION**
published in accordance with Art. 153(4) EPC

(43) Date of publication:
**03.06.2009 Bulletin 2009/23**

(21) Application number: **06798348.6**

(22) Date of filing: **20.09.2006**

(51) Int Cl.:
*A47J 31/06* *(2006.01)* *B65D 77/00* *(2006.01)*

(86) International application number:
**PCT/JP2006/319090**

(87) International publication number:
**WO 2008/035443 (27.03.2008 Gazette 2008/13)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Teijin Fibers Limited**
**Osaka-shi, Osaka 541-0054 (JP)**

(72) Inventors:
• **KITAGAWA, Motohiro**
 **Osaka-shi**
 **Osaka 541-0054 (JP)**
• **KIKUCHI, Katsushi**
 **Matsuyama-shi**
 **Ehime 791-8041 (JP)**

(74) Representative: **HOFFMANN EITLE**
**Patent- und Rechtsanwälte**
**Arabellastrasse 4**
**81925 München (DE)**

(54) **FILTER FOR EXTRACTING LUXURY DRINK AND BAG FOR EXTRACTING LUXURY DRINK**

(57) A filter for extracting one's favorite drink constituted of a polyester based monofilament and having a woven fabric construction or a knitted fabric construction, with the polyester based monofilament comprising a polyester based monofilament having a flat sectional shape, and a bag for extracting one's favorite drink using the filter for extracting one's favorite drink.

Fig. 2

EP 2 064 976 A1

## Description

Technical Field

The present invention relates to a filter for extracting one's favorite drink which is a filter to be used for extracting one's favorite drink such as green tea, black tea, oolong tea, barley tea, jasmine tea, apple tea, stock liquid, coffee, and cocoa and which has a soft feeling and from which a one's favorite drink powder hardly leaks and to a bag for extracting one's favorite drink using the subject filter for extracting one's favorite drink.

Background Art

Filters constituted of a non-woven fabric such as polyolefin based fibers and polyester based fibers or paper or the like have hitherto been mainly used as a filter for extracting one's favorite drink to be used in drinking a one's favorite drink such as green tea and black tea.

In recent years, it is proposed to constitute a filter for extracting one's favorite drink by a mesh fabric resulting from weaving a nylon monofilament or a polyester monofilament into a plain weave construction. A bag for extracting one's favorite drink using a filter made of such a mesh fabric has such characteristic features that it has a sense of high quality because tea leaves in the inside of the bag can be seen from the outside and that it is excellent in flavor and extractability.

However, the filter for extracting one's favorite drink and the bag for extracting one's favorite drink each containing a nylon monofilament involved problems such as yellowing due to oxygen in air, dimensional change due to hot water at the time of extraction, loss of shape, change in color tone due to absorption of one's favorite drink components, poor liquid drainability in discharging the bag from a container after use, poor sedimentation properties of the extracting bag in hot water because of light specific gravity of nylon, and environmental pollution due to the generation of nitrogen oxides by burning after use.

On the other hand, as the filter for extracting one's favorite drink and the bag for extracting one's favorite drink each containing a polyester monofilament, there are proposed materials containing a fabric in which a point of intersection between a warp and a weft is not fused and materials containing a fabric in which a point of intersection between a warp and a weft is fused (see, for example, Patent Document 1 and Patent Document 2).

However, in the case where the extracting filter contains a fabric in which a part of intersection of yarns is not fused, thought the feeling was soft, bag making properties and shape retention properties during bag making of an extracting bag were not sufficient. In addition, there were involved problems such as texture divergence and leakage of tea leaves due to loss of shape of the woven fabric. On the other hand, in the case where the extracting filter contains a woven fabric in which a part of intersection of yarns is fused, though bag making properties and shape retention properties during bag making of an extracting bag were excellent, there was involved such a problem that the feeling is hard. In addition, in the case where a tetra-shaped extracting bag which has become recently popular is obtained by using such an extracting filter, there was involved such a problem that when the extracting bag is deformed by an external force, the extracting bag is deformed as it is and does not return to an original shape so that the appearance is poor.

Incidentally, a polyester multifilament having a flat sectional shape is disclosed in Patent Document 3. Also, a polyester multifilament made of a polyester as obtained by using a catalyst containing a titanium compound and a phosphorus compound is disclosed in Patent Document 4. Also, a tetra-shaped bag for extracting one's favorite drink is disclosed in Patent Document 5.

[Patent Document 1] Japanese Patent No. 3459951
[Patent Document 2] Japanese Patent No. 3459952
[Patent Document 3] WO 2004/009889
[Patent Document 4] WO 2004/063435
[Patent Document 5] JP-A-5-193615

Disclosure of the Invention

An object of the invention is to provide a filter for extracting one's favorite drink which has a soft feeling and from which a one's favorite drink powder hardly leaks and a bag for extracting one's favorite drink using the subject filter for extracting one's favorite drink. The foregoing object can be achieved by a filter for extracting one's favorite drink and a bag for extracting one's favorite drink according to the invention.

The filter for extracting one's favorite drink according to the invention is a filter for extracting one's favorite drink constituted of a polyester based monofilament and having a woven fabric construction or a knitted fabric construction, with the foregoing polyester based monofilament comprising a polyester based monofilament having a flat sectional shape.

Here, it is preferable that the foregoing polyester based monofilament has a single yarn fineness in the range of from 10 to 60 dtex. Furthermore, in the foregoing polyester based monofilament having a flat sectional shape, it is preferable that a sectional flatness of the flat sectional shape which is expressed by a ratio B/C1 of a length B in a longitudinal center line direction to a maximum width C1 in a direction intersecting perpendicular to this longitudinal center line falls within the range of from 2 to 6. Furthermore, in the flat section of the foregoing polyester based monofilament having a flat sectional shape, it is preferable that two or more constrictions per one side are formed and that a ratio C1/C2 of a maximum value C1 to a minimum value C2 of a width thereof falls within the range of from 1.05 to 4.00. It is preferable that the foregoing polyester based monofilament having a flat sectional shape is formed of polyethylene terephthalate having a melting point in the range of from 255 to 265°C. Furthermore, in the foregoing polyester based monofilament having a flat sectional shape, it is preferable that the subject polyester based monofilament has a core/sheath structure in which a core component thereof is formed of polyethylene terephthalate having a melting point in the range of from 255 to 265°C, whereas a sheath component thereof is formed of polyethylene terephthalate having isophthalic acid copolymerized therewith and having a melting point in the range of from 170 to 240°C.

In the polyester based monofilament constituting the filter for extracting one's favorite drink according to the invention, it is preferable that a polyester based monofilament having a round sectional shape is contained as other polyester based monofilament. In particular, it is preferable that a polyester based monofilament having a round sectional shape and having a single yarn fineness in the range of from 10 to 60 dtex is contained. It is preferable that such a polyester based monofilament having a round sectional shape has a core/sheath structure in which a core component thereof is formed of polyethylene terephthalate having a melting point in the range of from 255 to 265°C, whereas a sheath component thereof is formed of polyethylene terephthalate having isophthalic acid copolymerized therewith and having a melting point in the range of from 170 to 240°C.

In the filter for extracting one's favorite drink according to the invention, it is preferable that the polyester based monofilament does not contain a delustering agent. Furthermore, in the polyester based monofilament, it is preferable that the content of a metal element having a true specific gravity of $5.0 \text{ g/cm}^3$ or more is not more than 0.5 ppm by weight.

In the filter for extracting one's favorite drink according to the invention, it is preferable that the filter for extracting one's favorite drink has a woven fabric construction and has a warp density in the range of from 30 to 300 yarns/2.54 cm and a weft density in the range of from 30 to 300 yarns/2.54 cm. Furthermore, it is preferable that the filter for extracting one' s favorite drink has a plain weave construction. The filter for extracting one's favorite drink may have a mesh knitted fabric construction. Furthermore, it is preferable that the filter for extracting one's favorite drink has an opening rate in the range of from 40 to 75 %. Furthermore, in the filter for extracting one's favorite drink, it is preferable that at least a part of a point of intersection of filaments constituting the filter is fused. On that occasion, it is preferable that the point of intersection of filaments is fused in a lattice pattern.

The bag for extracting one's favorite drink according to the invention is a bag for extracting one's favorite drink using the foregoing filter for extracting one's favorite drink. It is preferable that such a bag for extracting one's favorite drink has a tetra shape.

Brief Description of the Drawings

Fig. 1 is an explanatory view to show one example of a sectional shape of a flat polyester based monofilament which can be employed in the filter for extracting one's favorite drink according to the invention.
Fig. 2 is a drawing-substituting photograph to show one example of the filter for extracting one's favorite drink according to the invention.
Fig. 3 is an explanatory view to show a tetra shape.

Best Modes for Carrying Out the Invention

The filter for extracting one' s favorite drink according to the invention is a filter for extracting one's favorite drink constituted of a polyester based monofilament and having a woven fabric construction or a knitted fabric construction, with the subject filter comprising a polyester based monofilament having a flat sectional shape.

When the filter for extracting one's favorite drink according to the invention comprises such a polyester based monofilament having a flat sectional shape, it is able to make an opening rate of the filter small without increasing its density due to its effect of flat section in comparison with a filter containing a monofilament not having a flat shape such as one having a round section or triangular section and having the same fineness. As a result, a filter for extracting one's favorite drink which has a soft feeling and from which a one's favorite drink powder hardly leaks is obtained.

It is preferable that a single yarn fineness of the polyester based monofilament falls within the range of from 10 to 60 dtex (more preferably from 10 to 40 dtex, and further preferably from 20 to 35 dtex). When the subject single yarn fineness is more than 60 dtex, there is a possibility that the thickness of the filter becomes large so that a soft feeling is impaired. On the contrary, when the subject single yarn fineness is less than 10 dtex, there is a possibility that sufficient monofilament tenacity is not obtained. In addition, there is a possibility that unless a weaving or knitting density of the filter is considerably increased, a one's favorite drink powder is liable to leak; and there is a possibility that when the density is increased, a degree of difficulty of weaving or knitting becomes high, leading to an increase of the costs.

In the foregoing polyester based monofilament having a flat sectional shape, it is preferable that a sectional flatness of the flat sectional shape which is expressed by a ratio B/C1 of a length B in a longitudinal center line direction to a maximum width C1 in a direction intersecting perpendicular to this longitudinal center line falls within the range of from 2 to 6 (more preferably from 3.1 to 5.0). When the subject sectional flatness is less than 2, there is a possibility that the foregoing effect of flat section is not sufficiently obtained. On the contrary, when the sectional flatness is more than 6, there is a possibility that the manufacture becomes difficult.

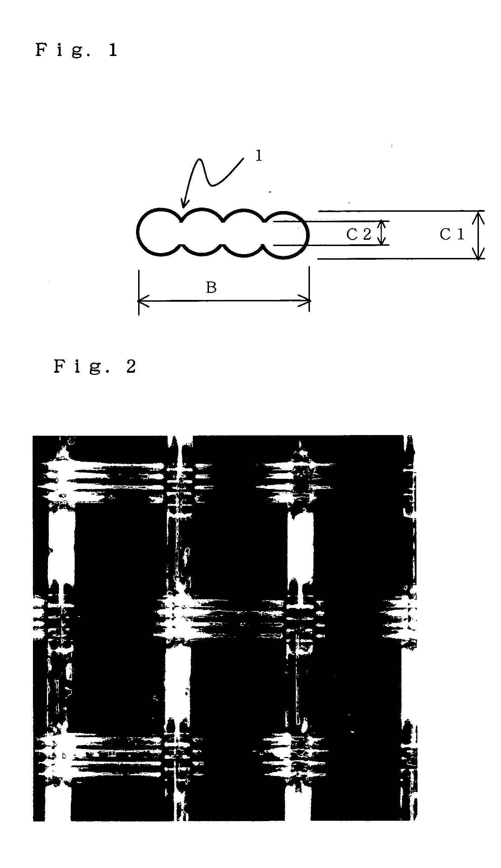

Furthermore, in the flat section of the foregoing polyester based monofilament having a flat sectional shape, as schematically illustrated in Fig. 1, two or more (preferably from three to five) constrictions per one side are formed, and it is preferable that a ratio C1/C2 of a maximum value C1 to a minimum value C2 of a width thereof falls within the range of from 1.05 to 4.00 (more preferably from 1.1 to 1.5). Incidentally, in a section 1 as illustrated in Fig. 1, three constrictions are formed symmetrically with respect to its longitudinal center line. Though the constrictions are preferably formed symmetrically with respect to the longitudinal center line, they may be formed asymmetrically. When the constrictions are formed in this way, since channels become a driving channel, in using a bag for extracting one's favorite drink containing the filter for extracting one's favorite drink by dipping it in hot water or cold water, the bag for extracting one's favorite drink is liable to sediment and is preferable. In addition, when channels are formed in a longitudinal direction of the monofilament, there are brought such effects that even when the sectional flatness is large, the polyester based monofilament is hardly twisted; that in arranging a polyester based monofilament having a flat sectional shape for a warp and a weft of a woven fabric, the polyester basedmonofilament is liable to be arranged in a state that a side face of a portion corresponding to a long side of the flat section is faced at a surface of the woven fabric; and that even in the case where a polyester based monofilament having a flat sectional shape is used, scattering of the opening rate of the woven fabric due to twisting is hardly generated.

A polyester based polymer which forms the foregoing polyester based monofilament is produced from a dicarboxylic acid component and a diglycol component. It is preferable that terephthalic acid is mainly used as the dicarboxylic acid component; and it is preferable that at least one alkylene glycol selected from ethylene glycol, trimethylene glycol and tetramethylene glycol is mainly used as the diglycol component. Above all, polyethylene terephthalate having a melting point in the range of from 255 to 265°C is preferable. Furthermore, the polyester based polymer may contain a third component in addition to the foregoing dicarboxylic acid component and glycol component. As the subject third component, at least one of dicarboxylic acids other than terephthalic acid, for example, isophthalic acid, naphthalene dicarboxylic acid, adipic acid, and sebacic acid; and glycol compounds other than alkylene glycols, for example, diethylene glycol, polyethylene glycol, bisphenol A, and bisphenolsulfone can be used. Above all, a copolymerization polyester composed of, as the acid component, terephthalic acid and isophthalic acid in a molar ratio (terephthalic acid/isophthalic acid) of from 90/5 to 85/15 and, as the glycol component, ethylene glycol and having a melting point of from 170 to 240°C (more preferably from 180°C to 220°C) is preferable. What the polyester based monofilament has such a melting point is preferable because fusion is easy in fusing the monofilaments with each other as described later.

Furthermore, it is preferable that the polyester based monofilament has a core/sheath structure in which a core component thereof is formed of polyethylene terephthalate having a melting point in the range of from 255 to 265°C, whereas a sheath component thereof is formed of polyethylene terephthalate having isophthalic acid copolymerized therewith and having a melting point in the range of from 170 to 240°C (more preferably from 180°C to 220°C). The melting point of the subject sheath component can be controlled by adjusting the amount of isophthalic acid to be copolymerized. Here, when the subject melting point is lower than 170°C, in fusing the monofilaments with each other as described later, the fusion can be easily achieved. However, there is a possibility that fiber strength of the monofilament is lowered, yarn making properties become worse, or process passing properties of the woven fabric making process become worse. On the contrary, when the melting point of the sheath component is higher than 240°C, there is a possibility that fusion properties become worse so that a sufficient adhesive strength is not obtained. Incidentally, a volume ratio of the core part and the sheath part falls within the range of from 80/20 to 20/80, preferably within the range of from 70/30 to 30/70, and more preferably within the range of from 60/40 to 40/60 in terms of a ratio of the former to the latter. Furthermore, when the volume ratio of the core component is less than 50 %, there is a possibility that fiber strength of the monofilament is lowered, yarn making properties become worse, or process passing properties of the woven fabric making process become worse. Thus, what the volume ratio of the core component is kept at 50 % or more is much more preferable.

Furthermore, in the foregoing polyester based polymer, it is preferable that the content of the delustering agent is not more than 0.1% by weight. In particular, it is preferable that the delustering agent is not contained in the polyester based polymer. In the case where the polyester based polymer does not contain a delustering agent such as titanium oxide, the polyester based monofilament becomes transparent and a one's favorite drink powder such as tea leaves in the bag for extracting one's favorite drink can be seen from the outside, whereby a sense of high quality is staged. Thus, such is preferable.

The foregoing polyester based monofilament having a flat sectional shape can be easily obtained by using the forgoing polyester based polymer in a spinning method as disclosed in, for example, WO 2004/009889. On that occasion, the polyester based polymer may be spun and stretched as a monofilament, or may be spun and stretched as a multifilament and then separated into a monofilament. Furthermore, in the polyester based polymer, it is preferable that the content of a metal element having a true specific gravity of 5. 0 g/cm$^3$ or more is not more than 0.5 ppm by weight. In particular, it is preferable that a metal having a true specific gravity of 5.0 g/cm$^3$ or more, such as antimony and germanium, is not contained in the polyester based polymer. When a metal element having a true specific gravity of 5.0 g/cm$^3$ or more is contained in the polyester based polymer, in using a filter for extracting one's favorite drink, there is a possibility that such a metal element elutes. Incidentally, the subj ect polyester based polymer can be obtained by using a catalyst containing a titanium compound and a phosphorus compound as disclosed in WO 2004/063435.

In the filter for extracting one's favorite drink according to the invention, though a mixing ratio of the foregoing polyester based monofilament having a flat sectional shape is not particularly limited, what the subject mixing ratio is higher is preferable because a filter for extracting one's favorite drink which has a soft feeling and from which a one's favorite drink powder hardly leaks is obtained. The subject mixing ratio is preferably 30 % by weight or more, more preferably 50 % by weight or more, and most preferably 100 % by weight.

In the filter for extracting one's favorite drink according to the invention, in the case where a polyester based monofilament not having a flat shape such as one having a round section or a triangular section is contained as other monofilament, such other polyester based monofilament is preferably a polyester based monofilament having a round sectional shape. In particular, it is preferable that a polyester based monofilament having a round sectional shape and having a single yarn fineness in the range of from 10 to 60 dtex is contained. As such a polyester based monofilament having a round sectional shape, it is preferable that a core component thereof is formed of polyethylene terephthalate having a melting point in the range of from 255 to 265°C, whereas a sheath component thereof is formed of polyethylene terephthalate having isophthalic acid copolymerized therewith and having a melting point in the range of from 170 to 240°C. By employing such a monofilament as other monofilament, in the case of fusing monofilaments with each other, the fusion can be easily achieved. Furthermore, it is preferable that a polyester based polymer forming such other monofilament does not contain a delustering agent for the same reason as described previously. In addition, it is preferable for the same reason as described previously that the content of a metal element having a true specific gravity of 5. 0 g /cm$^3$ which is contained in the polyester based polymer forming other monofilament is not more than 0.5 ppm by weight. Incidentally, a volume ratio of the core part and the sheath part falls within the range of from 80/20 to 20/80, preferably within the range of from 70/30 to 30/70, and more preferably within the range of from 60/40 to 40/60 in terms of a ratio of the former to the latter. Furthermore, when the volume ratio of the core component is less than 50 %, there is a possibility that fiber strength of the monofilament is lowered, yarn making properties become worse, or process passing properties of the woven fabric making process become worse. Thus, what the volume ratio of the core component is kept at 50 % or more is much more preferable.

In the filer for extracting one's favorite drink according to the invention, the filter may have a woven fabric construction or a knitted fabric construction, and its weave or knit construction is not particularly limited. For example, a woven fabric in which a woven fabric construction is employed and the foregoing polyester based monofilament having a flat sectional shape is arranged for a warp and a weft of the woven fabric; a woven fabric in which the foregoing polyester based monofilament having a flat sectional shape is arranged for either one of a warp or a weft of the woven fabric and a non-flat polyester based monofilament is arranged for the other; and a woven fabric in which the foregoing polyester based monofilament having a flat sectional shape and a non-flat polyester based monofilament are alternately arranged for a warp and/or a weft of the woven fabric are suitable. A plain weave construction is preferable as a weave construction of woven fabric. Furthermore, a mesh knittedfabric construction is preferable as a knit construction of knitted fabric.

Furthermore, with respect to the density of the weave or knit construction, it is preferable that a warp density falls within the range of from 30 to 300 yarns/2.54 cm (preferably from 60 to 180 yarns/2.54 cm, and more preferably from 80 to 130 yarns/2.54 cm) and that a weft density falls within the range of from 30 to 300 yarns/2.54 cm (preferably from 50 to 170 yarns/2.54 cm, and more preferably from 60 to 120 yarns/2.54 cm). When the density is more than such a range, there is a possibility that a soft feeling is impaired. On the contrary, when the density is less than such a range, there is a possibility that a one's favorite drink powder is liable to leak.

Furthermore, it is preferable that an opening rate of the filter falls within the range of from 40 to 75 %. When the subject opening rate is more than 75 %, there is a possibility that a one's favorite drink powder is liable to leak. On the contrary, when the subject opening rate is less than 40 %, there is a possibility that a soft feeling is impaired.

The filter for extracting one's favorite drink according to the invention can be easily knitted or woven by a usual weaving machine or kitting machine by using at least the foregoing polyester based monofilament having a flat sectional shape and by using a non-flat polyester based monofilament, if desired.

Furthermore, in the knitted or woven filter for extracting one's favorite drink, it is preferable that at least a part of a point of intersection of filaments constituting the filter is fused. For example, in the case where the filter has a woven fabric construction, it is preferable that at least a part of a point of intersection between a warp and a weft is fused. Furthermore, in the case where the filter has a knitted fabric structure, it is preferable that at least a part of adjacent groups is fused. When at least a part of a point of intersection of filaments is fused in this way, in bag making of a bag for extracting one's favorite drink by using the filter for extracting one's favorite drink, bag making properties and shape retention properties are improved, and fraying on a cut end face is hardly generated. Thus, such is preferable

With respect to such fusion in the point of intersection of filaments, all points of intersection may be fused, or the point of intersection may be fused in a prescribed pattern such as a crosswise lattice, an oblique lattice, and a stripe. Above all, in view of obtaining a softer feeling, it is preferable that the point of intersection of filaments is fused in a lattice pattern. Incidentally, since the filter for extracting one's favorite drink according to the invention contains the foregoing polyester based monofilament having flat sectional shape, even when all points of intersection are fused, a soft feeling is never impaired. Incidentally, in order to fuse all points of intersection, the filter may be heat treated in heated air which has been heated at a prescribed temperature. Furthermore, in order to fuse the point of intersection in a prescribed pattern, the filter may be heated by a heat roll having a prescribed pattern design.

As described previously, since the filter for extracting one's favorite drink according to the invention contains the foregoing polyester based monofilament having a flat shape, it is able to make an opening rate of the filter small without increasing its density due to its effect of flat section. As a result, the filter for extracting one's favorite drink according to the invention has such effects that it has a soft feeling and that a one's favorite drink powder hardly leaks. In addition, in the case of fusing a point of intersection of filaments, a contact area of the subject point of intersection becomes large so that fusion becomes easy.

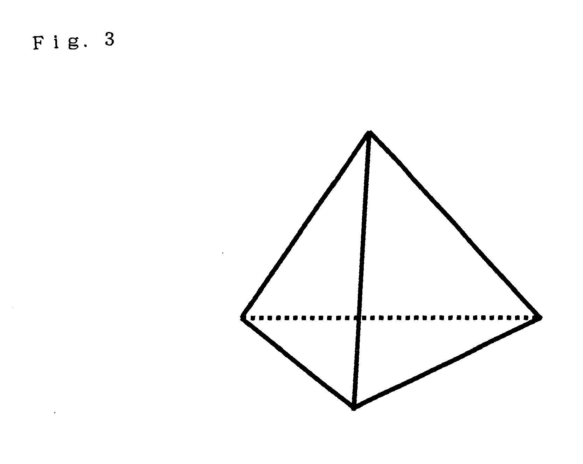

Next, the bag for extracting one's favorite drink according to the invention is a bag for extracting one's favorite drink using the filter for extracting one's favorite drink. Such a bag for extracting one's favorite drink includes a bag to be used upon dipping in hot water or cold water and a drip type bag. In particular, a bag having a tetra shape as illustrated in Fig. 3 is preferable.

[Examples]

Next, Examples and Comparative Examples of the invention will be hereunder described in detail, but it should not be construed that the invention is limited thereto. Incidentally, the respective measurement items in the Examples were measured in the following methods.

(1) Softness of feeling:

The softness of feeling was organoleptically evaluated by three panels on a scale of four grades in which "class 4" means that the feeling is very soft; "class 3" means that the feeling is soft; "class 2" means that the feeling is moderate; and "class 1" means that the feeling is hard.

(2) Difficulty of leakage of one's favorite drink powder:

As an index for evaluating the difficulty of leakage of one's favorite drink powder, a certain amount of a powder made of $Al_2O_3$ having a particle size of from 250 to 355 $\mu$m (WHITE ARANDOM WAF54, which is a ceramic based polisher manufactured by Sanshokenmazai Co., Ltd.) as likened to a one's favorite drink powder was charged in a bag for extracting one's favorite drink, the subject bag was dipped in hot water, and the difficulty of leakage of powder was evaluated on a scale of four grades in which "class 4" means that the powder does not substantially leak (leakage: 0 to 10 %); "class 3" means that the powder slightly leaks (leakage: 10 to 25 %) ; "class 2" means that the powder leaks (leakage: 25 to 50 %) ; and "class 1" means that the powder considerably leaks (leakage: 50 % or more).

(3) Opening rate (%) of filter:

The opening rate (%) of filter was calculated according to the following expression. Incidentally, the "area of opening" as referred to herein means a total area of an opening as formed of a warp and a weft.

$$[\text{Opening rate (\%)}] = [\text{Area of opening area } (mm^2)]/[\text{Total area}$$

$$\text{of sample } (mm^2)] \times 100$$

(4) Melting point:

The melting point was determined by measuring a melting peak at a temperature rise of 20°C/min by using a differential thermal analyzer Model 990, manufactured by Du Pont.

(5) Shape retention properties:

In applying a force to a filter, whether or not the filter easily caused divergence was evaluated on a scale of three grades in which "class 3" means that the filter hardly causes divergence so that the shape retention properties are satisfactory; "class 2" means that the shape retention properties are moderate; and "class 1" means that the filter readily causes divergence so that the shape retention properties are poor.

(6) Bag making properties:

With respect to the shape retention properties, in obtaining a bag for extracting one's favorite drink using a filter, whether or not the filter was easily deformed was evaluated on a scale of three grades in which "class 3" means that the filter was hardly deformed so that the bag making properties are satisfactory; "class 2" means that the bag making properties are moderate; and "class 1" means that the filter was readily deformed so that the bag making properties are poor.

[Example 1]

First of all, delustering agent-free polyethylene terephthalate (melting point: 257°C, content of a metal element having a true specific gravity of 5.0 $g/cm^3$ or more: 0 ppm) was obtained according to a method as disclosed in WO 2004/063435 by using 5 mmole % of titanium trimellitate (titanium compound) and 30 mmole % of triethyl phosphonoacetate (phosphorus compound) as a polymerization catalyst. Also, delustering agent-free copolymerization polyethylene terephthalate composed of, as an acid component, terephthalic acid and isophthalic acid in a molar ratio of 93/7 and, as a glycol component, ethylene glycol (melting point: 217°C, content of a metal element having a true specific gravity of 5.0 $g/cm^3$ or more: 0 ppm) was obtained by using 5 mmole % of titanium trimellitate (titanium compound) and 30 mmole % of triethyl phosphonoacetate (phosphorus compound) as a polymerization catalyst. Then, the foregoing polyethylene terephthalate was arranged for a core part, whereas the foregoing copolymerization polyethylene terephthalate was arranged for a sheath part; and the both were fed into a core/sheath type composite melt spinning device, spun at a spinning temperature of 290°C and then stretched, thereby obtaining a core/sheath type polyester based monofilament (volume ratio of the core part to the sheath part: 80/20) having a single yarn fineness of 27 dtex and having a round section in which the foregoing polyethylene terephthalate was arranged for the core part, whereas the foregoing copolymerization polyethylene terephthalate was arranged for the sheath part.

On the other hand, the foregoing polyethylene terephthalate was used and spun at a spinning temperature of 300°C by passing through one melt spinning hole as perforated in a spinning nozzle and having a shape corresponding to a filament sectional shape as illustrated in Fig. 1 (having four protrusions in a circular arc form per one side on both sides of the longitudinal center line and three constrictions formed thereamong), followed by stretching. There was thus obtained a flat section-shaped polyester based monofilament having a sectional shape having three constrictions per one side as illustrated in Fig. 1 and having a sectional flatness thereof of 3.2, a value of a ratio C1/C2 in a filament sectional width of 1.2 and a single yarn fineness of 27 dtex.

Subsequently, the foregoing core/sheath type polyester based monofilament having a round section was arranged for a warp, whereas the foregoing polyester based monofilament having a flat sectional shape was arranged for a weft, thereby weaving a woven fabric having a plain weave construction. Thereafter, the subject woven fabric was refined by a dip treatment in a warm bath containing sodium carbonate at a temperature of 80°C, washed with water and then dried.

Subsequently, the subject woven fabric was heat treated (at 215°C) in heated air while applying a tension thereto to fuse all points of intersection between the warp and the weft of the woven fabric, thereby obtaining a filter for extracting one's favorite drink made of a woven fabric having a plain weave construction and having a warp density of 113 yarns/2.54 cm and a weft density of 80 yarns/2.54 cm as shown in Fig. 2.

The thus obtained filter for extracting one's favorite drink had an opening rate of 56 % and was excellent in softness such that the softness of feeling was class 3.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 4 such that the powder did not substantially leak.

Also, the bag was satisfactory in both the shape retention properties and the bag making properties such that the shape retention properties were class 3 and that the bag making properties were class 3.

[Example 2]

The same polyethylene terephthalate as in Example 1 was used in a core part, and the same copolymerization polyethylene terephthalate as in Example 1 was used in a sheath part; and the both were spun at a spinning temperature of 290°C by using a core/sheath type composite melt spinning device having a spinning nozzle having one melt spinning hole perforated therein and having a shape corresponding to a filament sectional shape as illustrated in Fig. 1 (having four protrusions in a circular arc form per one side on both sides of the longitudinal center line and three constrictions formed thereamong), followed by stretching. There was thus obtained a flat section-shaped core/sheath type polyester based monofilament (volume ratio of the core part to the sheath part: 80/20) having a sectional shape as illustrated in Fig. 1 and having a sectional flatness thereof of 3.2, a value of a ratio C1/C2 in a filament sectional width of 1.2 and a single yarn fineness of 27 dtex. The subject core/sheath type polyester based monofilament having a flat sectional shape was arranged for a warp and a weft, respectively, and a woven fabric having a plain weave construction was woven in the same manner as in Example 1. Thereafter, the subject woven fabric was refined by a dip treatment in a warm bath containing sodium carbonate at a temperature of 80°C, washed with water and then dried.

Subsequently, the subject woven fabric was heat treated (at 215°C) in heated air while applying a tension thereto to fuse all points of intersection between the warp and the weft of the woven fabric, thereby obtaining a filter for extracting one's favorite drink made of a woven fabric having a plain weave construction and having a warp density of 97 yarns/2.54 cm and a weft density of 88 yarns/2.54 cm.

The thus obtained filter for extracting one's favorite drink had an opening rate of 46 % and was very excellent in softness such that the softness of feeling was class 4.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 4 such that the powder did not substantially leak.

Also, the bag was satisfactory in both the shape retention properties and the bag making properties such that the shape retention properties were class 3 and that the bag making properties were class 3.

[Example 3]

The same polyethylene terephthalate as in Example 1 was used, spun at a spinning temperature of 300°C by using a usual melt spinning device and then stretched, thereby obtaining a polyester based monofilament having a round sectional shape and having a single yarn fineness of 27 dtex.

Subsequently, the subject polyester based monofilament having a round sectional shape and the same core/ sheath type polyester based monofilament (volume ratio of the core part to the sheath part: 80/20) having a round section as in Example 1 were arranged in a one-by-one alternating arrangement for a warp, whereas the same polyester based monofilament having a flat sectional shape as in Example 1 was arranged for a weft, and a woven fabric having a plain weave construction was woven in the same manner as in Example 1. Thereafter, the subject woven fabric was refined by a dip treatment in a warm bath containing sodium carbonate at a temperature of 80°C, washed with water and then dried.

Subsequently, the subject woven fabric was heat treated (at 215°C) in heated air while applying a tension thereto to fuse a part of a point of intersection between the warp and the weft of the woven fabric, thereby obtaining a filter for extracting one's favorite drink made of a woven fabric having a plain weave construction and having a warp density of 113 yarns/2.54 cm and a weft density of 80 yarns/2.54 cm.

The thus obtained filter for extracting one's favorite drink had an opening rate of 56 % and was very excellent in softness such that the softness of feeling was class 4.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 4 such that the powder did not substantially leak.

Also, the bag was satisfactory in both the shape retention properties and the bag making properties such that the shape retention properties were class 3 and that the bag making properties were class 3.

[Example 4]

A woven fabric having a plain weave construction and having a warp density of 113 yarns/2.54 cm and a weft density of 80 yarns/2.54 cm, in which a point of intersection between the warp and the weft of the woven fabric was not fused, was obtained in the same manner as in Example 1, except that in Example 1, the temperature of the heat treatment was changed to 190°C.

Subsequently, the subject woven fabric having a plain weave construction was heat pressed at 220°C by a heat roll engraved with an oblique lattice design to partially fuse a point of intersection between the warp and the weft only in a portion of the design of the heat roll, thereby obtaining a filter for extracting one's favorite drink.

The thus obtained filter for extracting one's favorite drink had an opening rate of 48 % and was very excellent in softness such that the softness of feeling was class 4.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 4 such that the powder did not substantially leak.

Also, the bag was satisfactory in both the shape retention properties and the bag making properties such that the shape retention properties were class 3 and that the bag making properties were class 3.

[Example 5]

A filter for extracting one's favorite drink was obtained in the same manner as in Example 1, except that in Example 1, the heat treatment temperature in heated air was changed to 190°C, thereby not fusing a point of intersection between the warp and the weft.

The thus obtained filter for extracting one's favorite drink had an opening rate of 56 % and was excellent in softness such that the softness of feeling was class 3.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 4 such that the powder did not substantially leak.

However, when a force was applied to the woven fabric, the bag was liable to cause divergence so that it was slightly inferior in shape retention properties (class 1). Furthermore, in obtaining the tetra-shaped bag for extracting one's favorite drink, since the point of intersection between the warp and the weft was not fused, strain and deformation in a bias direction (oblique direction) was liable to be generated, and bag making properties (class 1) were slightly insufficient. In addition, fraying on the cut end face was generated.

[Comparative Example 1]

A filter for extracting one's favorite drink made of a woven fabric having a plain weave construction and having a warp density of 97 yarns/2.54 cm and a weft density of 88 yarns/2.54 cm was obtained in the same manner as in Example 1, except that in Example 1, a core/sheath type polyester based monofilament having a round section was arranged for all a warp and a weft.

The thus obtained filter for extracting one's favorite drink had an opening rate of 67 % and was inferior in softness such that the softness of feeling was class 1.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM

WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 3 such that the leakage of the powder was somewhat observed.

Also, the bag was satisfactory in both the shape retention properties and the bag making properties such that the shape retention properties were class 3 and that the bag making properties were class 3.

[Comparative Example 2]

A filter for extracting one's favorite drink made of a woven fabric having a plain weave construction and having a warp density of 70 yarns/2.54 cm and a weft density of 65 yarns/2.54 cm was obtained in the same manner as in Example 1, except that in Example 1, a core/sheath type polyester based monofilament having a round section was arranged for all a warp and a weft.

The thus obtained filter for extracting one's favorite drink had an opening rate of 76 % and was inferior in softness such that the softness of feeling was class 1.

Subsequently, the subject filter for extracting one's favorite drink was used and fused by an ultrasonic sealing method, thereby obtaining a bag for extracting one's favorite drink having a tetra shape as illustrated in Fig. 3. Then, the bag having charged therein a powder made of $Al_2O_3$ having a particle size of from 250 to 355 $\mu$m (WHITE ARANDOM WAF54, which is a ceramic based polisher manufactured by Sanshokenmazai Co., Ltd.) as a one's favorite drink powder was dipped in hot warm, thereby evaluating the difficulty of leakage of the one's favorite drink powder. As a result, the bag exhibited class 1 such that the powder considerably leaked.

Also, the bag was satisfactory in both the shape retention properties and the bag making properties such that the shape retention properties were class 3 and that the bag making properties were class 3.

Industrial Applicability

According to the invention, a filter for extracting one's favorite drink which has a soft feeling and from which a one's favorite drink powder hardly leaks and a bag for extracting one's favorite drink using the subject filter for extracting one's favorite drink are provided, and these have high practicality.

**Claims**

1. A filter for extracting one's favorite drink constituted of a polyester based monofilament and having a woven fabric construction or a knitted fabric construction, with the polyester based monofilament comprising a polyester based monofilament having a flat sectional shape.

2. The filter for extracting one's favorite drink according to claim 1, wherein the polyester based monofilament has a single yarn fineness in the range of from 10 to 60 dtex.

3. The filter for extracting one's favorite drink according to claim 1, wherein in the polyester based monofilament having a flat sectional shape, a sectional flatness of the flat sectional shape which is expressed by a ratio B/C1 of a length B in a longitudinal center line direction to a maximum width C1 in a direction intersecting perpendicular to this longitudinal center line falls within the range of from 2 to 6.

4. The filter for extracting one's favorite drink according to claim 1, wherein in the flat section of the foregoing polyester based monofilament having a flat sectional shape, two or more constrictions per one side are formed, and a ratio C1/C2 of a maximum value C1 to a minimum value C2 of a width thereof falls within the range of from 1.05 to 4.00.

5. The filter for extracting one's favorite drink according to claim 1, wherein the polyester based monofilament having a flat sectional shape is formed of polyethylene terephthalate having a melting point in the range of from 255 to 265°C.

6. The filter for extracting one's favorite drink according to claim 1, wherein in the polyester based monofilament having a flat sectional shape, the polyester based monofilament has a core/sheath structure in which a core component thereof is formed of polyethylene terephthalate having a melting point in the range of from 255 to 265°C, whereas a sheath component thereof is formed of polyethylene terephthalate having isophthalic acid copolymerized therewith and having a melting point in the range of from 170 to 240°C.

7. The filter for extracting one's favorite drink according to claim 1, wherein the polyester based monofilament further comprises a polyester based monofilament having a round sectional shape as other polyester based monofilament.

8.  The filter for extracting one's favorite drink according to claim 7, wherein the polyester based monofilament having a round sectional shape has a core/sheath structure in which a core component thereof is formed of polyethylene terephthalate having a melting point in the range of from 255 to 265°C, whereas a sheath component thereof is formed of polyethylene terephthalate having isophthalic acid copolymerized therewith and having a melting point in the range of from 170 to 240°C.

9.  The filter for extracting one' s favorite drink according to claim 1, wherein the polyester based monofilament does not contain a delustering agent.

10. The filter for extracting one' s favorite drink according to claim 1, wherein in the polyester based monofilament, the content of a metal element having a true specific gravity of 5.0 $g/cm^3$ or more is not more than 0.5 ppm by weight.

11. The filter for extracting one' s favorite drink according to claim 1, wherein the filter for extracting one's favorite drink has a woven fabric construction and has a warp density in the range of from 30 to 300 yarns/2.54 cm and a weft density in the range of from 30 to 300 yarns/2.54 cm.

12. The filter for extracting one's favorite drink according to claim 1, wherein the filter for extracting one's favorite drink has a plain weave construction.

13. The filter for extracting one' s favorite drink according to claim 1, wherein the filter for extracting one's favorite drink has a mesh knitted fabric construction.

14. The filter for extracting one' s favorite drink according to claim 1, wherein the filter for extracting one's favorite drink has an opening rate in the range of from 40 to 75 %.

15. The filter for extracting one' s favorite drink according to claim 1, wherein in the filter for extracting one' s favorite drink, at least a part of a point of intersection of filaments constituting the filter is fused.

16. The filter for extracting one's favorite drink according to claim 15, wherein the point of intersection of filaments is fused in a lattice pattern.

17. A bag for extracting one's favorite drink using the filter for extracting one's favorite drink according to any of claims 1 to 14.

18. The bag for extracting one's favorite drink according to claim 17, wherein the bag for extracting one' s favorite drink has a tetra shape.

EP 2 064 976 A1

Fig. 1

Fig. 2

Fig. 3

## INTERNATIONAL SEARCH REPORT

| International application No. |
|---|
| PCT/JP2006/319090 |

A.  CLASSIFICATION OF SUBJECT MATTER
*A47J31/06*(2006.01)i, *B65D77/00*(2006.01)i

According to International Patent Classification (IPC) or to both national classification and IPC

B.  FIELDS SEARCHED

Minimum documentation searched (classification system followed by classification symbols)
A47J31/06, B65D77/00, D01F6/92, D01F8/14, D03D15/00

Documentation searched other than minimum documentation to the extent that such documents are included in the fields searched
    Jitsuyo Shinan Koho      1922-1996   Jitsuyo Shinan Toroku Koho   1996-2006
    Kokai Jitsuyo Shinan Koho   1971-2006   Toroku Jitsuyo Shinan Koho   1994-2006

Electronic data base consulted during the international search (name of data base and, where practicable, search terms used)
    WPI

C.  DOCUMENTS CONSIDERED TO BE RELEVANT

| Category* | Citation of document, with indication, where appropriate, of the relevant passages | Relevant to claim No. |
|---|---|---|
| Y | JP 3163415 B  (Teijin Ltd.),<br>02 March, 2001 (02.03.01),<br>Par. Nos. [0018] to [0039]<br>& JP 9-308578 A | 1-18 |
| Y | JP 9-241486 A  (Toray Industries, Inc.),<br>16 September, 1997 (16.09.97),<br>Full text; tables 1 to 9<br>(Family: none) | 1-18 |
| Y | WO 2004/009889 A1  (Teijin Fibers Ltd.),<br>29 January, 2004 (29.01.04),<br>Full text; all drawings<br>& US 2005-176323 A1    & EP 1524343 A1<br>& CA 2461551 A      & CN 1585841 A<br>& JP 2004-52191 A    & JP 2004-60064 A<br>& JP 2005-176323 A | 3,4,6,8,9,<br>14-16 |

[X]  Further documents are listed in the continuation of Box C.    [ ]  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    22 December, 2006 (22.12.06) | Date of mailing of the international search report<br>    09 January, 2007 (09.01.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/319090 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2004/063435 A1  (Teijin Fibers Ltd.),<br>29 July, 2004 (29.07.04),<br>Full text; all drawings<br>& US 2006-51576 A1        & EP 1584712 A1<br>& CA 2513056 A              & JP 2004-21268 A<br>& JP 2004-211269 A        & JP 2004-270068 A<br>& JP 2004-270097 A | 3,4,6,8,9,<br>14-16 |
| Y | JP 3459951 B  (Kanebo, Ltd.),<br>15 August, 2003 (15.08.03),<br>Full text; all drawings<br>& JP 2001-118561 A | 6,8,14-16 |
| Y | JP 3459952 B  (Kanebo, Ltd.),<br>15 August, 2003 (15.08.03),<br>Full text; all drawings<br>& JP 2001-128233 A | 6,8,14-16 |
| A | JP 3083190 B  (Yamanaka Sangyo Kabushiki Kaisha),<br>30 June, 2000 (30.06.00),<br>Par. Nos. [0028] to [0036]; Figs. 6 to 8<br>& JP 5-147670 A | 1-18 |

Form PCT/ISA/210 (continuation of second sheet) (April 2005)

**REFERENCES CITED IN THE DESCRIPTION**

**Patent documents cited in the description**

- JP 3459951 B
- JP 3459952 B
- WO 2004009889 A
- WO 2004063435 A
- JP 5193615 A